(19) Europäisches Patentamt
European Patent Office
Office européen des brevets

(11) **EP 0 932 285 B1**

(12) **EUROPEAN PATENT SPECIFICATION**

(45) Date of publication and mention
of the grant of the patent:
**25.07.2007   Bulletin 2007/30**

(51) Int Cl.:
***H04L 27/26*** *(2006.01)*

(21) Application number: **99300491.0**

(22) Date of filing: **22.01.1999**

(54) **Reduction of instantaneous maximum power in multicarrier signals**

Verringerung der momentanen Maximalleistung eines Mehrträgersignals

Réduction du pouvoir maximal instantané d'un signal multiporteur

(84) Designated Contracting States:
**DE FR GB**

(30) Priority: **22.01.1998   JP   1062498**
**13.03.1998   JP   6363298**

(43) Date of publication of application:
**28.07.1999   Bulletin 1999/30**

(73) Proprietor: **KABUSHIKI KAISHA TOSHIBA**
**Kawasaki-shi,**
**Kanagawa-ken 210-0913 (JP)**

(72) Inventors:
• **Sato, Kazumi**
**Yokohama-shi,**
**Kanagawa-ken, 230-0017 (JP)**

• **Namekata, Minoru**
**Kawasaki-shi,**
**Kanagawa-ken, 213-0033 (JP)**

(74) Representative: **Waldren, Robin Michael**
**Marks & Clerk**
**90 Long Acre**
**London WC2E 9RA (GB)**

(56) References cited:
**EP-A- 0 725 510          US-A- 5 125 100**
**US-A- 5 381 449          US-A- 5 490 172**

• **PATENT ABSTRACTS OF JAPAN vol. 1999, no. 12, 29 October 1999 (1999-10-29) -& JP 11 205276 A (NIPPON TELEGR &TELEPH CORP <NTT>), 30 July 1999 (1999-07-30)**

# Description

Background of the Invention

Field of the Invention

The present invention relates to an apparatus for and a method of transmitting OFDM signals for radio transmission of digital data sequence by OFDM signals. More particularly, it relates to an apparatus for and a method of transmitting OFDM signals in order to reduce the instantaneous maximum power of OFDM signals.

Related Art Statement

Recently, the spotlight of attention has been focused upon a fast radio data communication system both indoors or outdoors. In order to realize fast data communications, a radio communication system needs a reduction in multipath interference due to transmitted signals reflected by buildings and received through various channels.

Occurrence of multipath interference seriously deteriorates reception characteristics. Usually, equalizers are used as multipath-compensated receiving systems. However, application of an equalizer to a fast radio communication system is not realistic, because its large apparatus scale is definitely disadvantageous in respect to miniaturization and economy of power consumption.

Hereupon, discussion has been given about a radio communication system which uses Orthogonal Frequency Division Multiplexing (OFDM) system as a countermeasure against multipath. The OFDM system is a multi carrier transmission system to transmit data by putting a subcarrier at minimum intervals orthogonally crossing each other. Since this transmission system can substantially ease the influence of intersymbol interference caused by multipath, it can suppress deterioration in its reception characteristic even when multipath occurs.

Moreover, since the OFDM system can significantly reduce the transmission rate of each subcarrier, modulation and demodulation of multi carrier signals becomes possible by batch processing (fast inverse Fourier transformation and fast Fourier transformation) by digital signal processing.

However, since OFDM signals are composed of subcarriers modulated in data sequences which are independent of each other in a wide frequency band, the amplitude characteristic of OFDM signal time waveform becomes a more Gaussian distribution (normal distribution) the more the number of subcarriers increases. Therefore, different from single-carrier transmission system, amplitude variation and maximum amplitude value are large and it requires a wider dynamic range in a sending and receiving apparatus. Consequently, when the backoff of a transmitting power amplifier is set to small, occurrence of non-linear distortion by power amplification is inevitable. When OFDM signals receive non-linear distortion, orthogonality among subcarriers collapses, and the transmission characteristic deteriorates radically. This particularly forces to set backoff of a transmitting power amplifier large, and lowering in efficiency of a transmitting power amplifier is unavoidable.

Although application of a linearizer is discussed in order to make backoff operate smaller, it is unsuitable for miniaturization, reduction in power consumption and in cost, due to enlargement of the apparatus scale.

As a measure to solve this problem, a method is discussed where maximum instantaneous power for each of unit time waveforms of OFDM transmission system (OFDM symbol) is detected, and corresponding to the detected maximum instantaneous power, average power of transmitting OFDM symbols is controlled. In this method, maximum instantaneous power of all symbols is made constant by normalizing time waveforms of OFDM symbols with maximum instantaneous power. Constant maximum instantaneous power of all symbols enables the reduction of the backoff amount of a transmitting power amplifier.

However, in this method, while a transmitting power amplifier can be operated highly efficiently, transmission quality varies with every OFDM symbol to be transmitted. This is a shortcoming of this method.

As another solution, a method has been proposed where redundant bits are added to the information bit sequence which composes OFDM signals. In this method, by adding redundant bits, time waveforms of a plurality of OFDM symbols can be generated for one data sequence. And, maximum instantaneous power can be reduced by selecting, out of all combinations of time waveforms of OFDM symbols, a time waveform with small maximum instantaneous power, and allocating it to the original information bit sequence.

In order to allocate an information bit sequence to a time waveform, however, it is necessary either to prepare a combination table of transmitting information and redundant information at the transmitting side and the receiving side, or to perform a complicated logical calculating process in order to find a combination, enlarging the apparatus scale. Besides, when an error occurs in a received OFDM symbol, an information bit sequence, which corresponds to the received OFDM symbol, may not exist in the table. In this case, the whole of the received OFDM symbols may be in error.

As another solution, there is a method where subcarrier signals of OFDM are divided into a plurality of groups, and a time waveform is generated for each group. Time waveforms generated for each group are transmitted from a plurality of corresponding antennas simultaneously. In this method, since the number of subcarriers to be transmitted by one antenna decreases, maximum instantaneous power of time waveforms to be transmitted by one antenna can be reduced.

However, a transmitter needs a plurality of time waveform generating means, a plurality of power amplifiers and a plurality of antennaes, enlarging the apparatus scale extremely.

Thus, OFDM transmission sometimes applies a method of transmitting normalized maximum amplitude of a time waveform for each OFDM symbol in order to make a transmitting power amplifier operate efficiently without any particularly large-scaled apparatus. In this method, however, since transmission quality varies with every transmitted OFDM symbol, propagation errors are liable to arise. Besides, the method is unsuitable for data transmission which is capable of retransmission control. There is another method, which is sometimes applied, of suppressing maximum amplitude value of a time waveform of OFDM symbols by adding redundant information to transmitting information of each OFDM symbol. However, this method needs a transmitting and receiving apparatus provided with a combination table of transmitting information and redundant information, enlarging the apparatus scale. Besides, it has a problem that all of the received data sequence must be discarded if a sequence which does not exist in the table is received. A further possible method is to process OFDM subcarriers by dividing them into a plurality of groups. In this method, a transmitter requires a plurality of time waveform generating means, a plurality of power amplifiers and a plurality of antennas, causing a problem of significantly large apparatus scale.

EP 0 725 510 discloses an apparatus for reducing peak-to-average requirements in multi-tone communication circuits wherein a magnitude adjusting symbol is added to the time domain discrete multi-tone symbol generated by a signal generator in order to reduce the magnitude of the multi-tone symbol and reduce peak-to-average requirements.

Object and Summary of the Invention

The object of the present invention is to provide an apparatus for and a method of transmitting OFDM signals which are able to reduce the maximum instantaneous power of an OFDM time waveform without enlarging the apparatus scale significantly, and to mitigate transmission errors at the time of data transmission by improving average transmitting power.

An apparatus for transmitting OFDM signals according to the present invention comprises:

> converting means for converting a plurality of frequency-domain complex subcarrier signals into a complex baseband time waveform of OFDM symbols; and
> complex redundant subcarrier generating means for generating at least one frequency domain complex redundant subcarrier signal to reduce a maximum amplitude of the complex baseband time waveform of OFDM symbols output from said converting means, wherein said at least one frequency-domain complex redundant subcarrier signal is inputted into said converting means with a plurality of frequency domain complex information subcarrier signals for transmitting information,

characterized in that said apparatus comprises a table to show the relation of information to be transmitted by said plurality of frequency-domain complex information subcarrier signals with said at least one frequency domain complex, redundant subcarrier signal to reduce the maximum amplitude of the complex baseband time waveform of said OFDM symbols.

Other features and advantages of the present invention will become apparent enough from reading of the following description.

Brief Description of the Drawings

> Fig 1. is a block diagram showing an embodiment of an apparatus for transmitting OFDM signals which is constructed in accordance with the present invention.
> Figs. 2 A and 2 B are explanatory drawings illustrating operation of an embodiment.
> Fig. 3 is an explanatory drawings illustrating operation of an embodiment.
> Fig. 4 is an explanatory drawings illustrating operation of an embodiment.
> Fig. 5 is an explanatory drawings illustrating operation of an embodiment.
> Fig. 6 is a block diagram showing an example useful for understanding the present invention.
> Fig. 7 is a block diagram showing an example useful for understanding the present invention.
> Fig. 8 is an explanatory drawings illustrating operation of an embodiment.
> Fig. 9 is an explanatory drawings illustrating operation of an embodiment.
> Fig. 10 is an explanatory drawings illustrating operation of an embodiment.
> Fig. 11 is an explanatory drawings illustrating operation of an embodiment.
> Fig. 12 is an explanatory drawings illustrating operation of an embodiment.
> Fig. 13 is a block diagram showing another example useful for understanding the present invention.
> Fig. 14 is a block diagram showing a specific configuration of a maximum power detecting part 23 shown in Fig. 13.
> Fig. 15 is a flow chart illustrating operation of the example shown in Fig. 13.
> Fig. 16 is a flow chart illustrating operation of the example shown in Fig. 13.
> Fig. 17 is a block diagram illustrating another embodiment of the present invention.
> Fig. 18 is a flow chart illustrating operation of the embodiment shown in Fig. 17.

Fig. 19 is a flow chart illustrating operation of the embodiment shown in Fig. 17.

Fig. 20 is a flow chart to show a modification of Fig. 13.

Fig. 21 is a graph to illustrate Fig. 20.

Fig. 22 is a chart illustrating Fig. 20.

Fig. 23 is a flow chart to show a modification of Fig. 13.

Detailed Description of the Preferred Embodiments

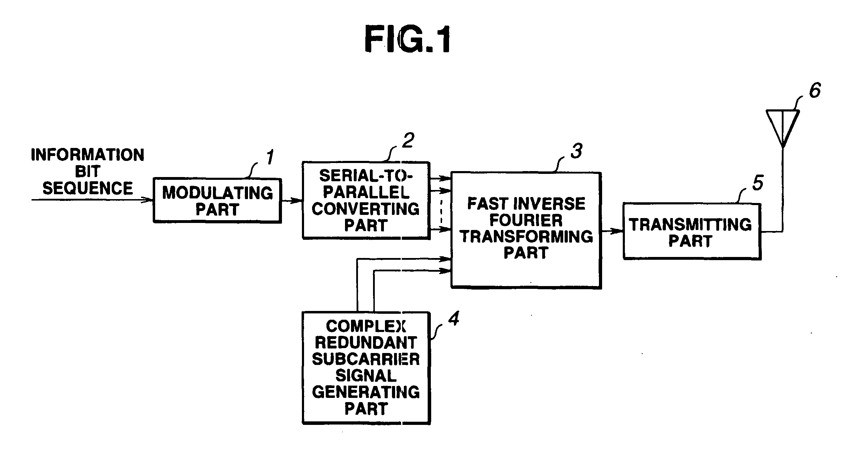

Embodiments of the present invention will now be described in detail hereinafter with reference to the accompanying drawings. Fig. 1 is a block diagram showing an embodiment of an apparatus for transmitting OFDM signals according to the present invention.

An inputted information bit sequence is supplied to a modulating part 1. The modulating part 1 modulates the information bit sequence in a predetermined modulating technique, and outputs it to a serial-to-parallel converting part 2. The serial-to-parallel converting part 2 converts a complex information subcarrier signal sequence, which has been inputted in series and modulated, into a predetermined number of parallel subcarrier signals. From the serial-to-parallel converting part 2, a plurality of modulating signals are simultaneously outputted as complex information subcarrier signals. These complex information subcarrier signals are supplied to a fast inverse Fourier transforming part 3.

A complex redundant subcarrier signal generating part 4 generates, in a method to be described later, complex redundant subcarrier signals to reduce the maximum amplitude of a complex baseband time waveform of OFDM symbols obtained by fast inverse Fourier transformation. Complex redundant subcarrier signals, which have been generated by the complex redundant subcarrier signal generating part 4 (two signals in Fig. 1), are supplied to the fast inverse Fourier transforming part 3.

The fast inverse Fourier transforming part 3 is designed to give fast inverse Fourier transforming process to inputted subcarrier signals, convert them into complex baseband time waveforms, and output them to a transmitting part 5.

The transmitting part 5 generates transmission signals and supplies them to an antenna 6 by giving transmission processes to the generated complex baseband time waveforms, processes such as guard time adding process to absorb delay wave components caused by multipath, D/A converting process, amplifying process on transmission signals, and frequency converting process. The antenna 6 radiates transmission signals.

A complex baseband time waveform of OFDM symbols from the fast inverse Fourier transforming part 3 has its amplitude and maximum amplitude value changed by each of the subcarrier signals inputted. In other words, the range of fluctuation in amplitude of a time waveform of OFDM symbols can be controlled by properly setting a complex level of each subcarrier signal inputted to the fast inverse Fourier transforming part 3. In this case, amplitude fluctuation of a complex baseband time waveform of OFDM symbols can be controlled, without changing the level of complex information subcarrier signals, by properly setting only frequencies and levels of complex redundant subcarriers giving no influence on information components contained in OFDM signals to be generated.

For example, the complex redundant subcarrier signal generating part 4 can generate complex redundant subcarrier signals to reduce the maximum amplitude of a complex baseband time waveform of OFDM symbols by generating a complex baseband time waveform of OFDM symbols only from complex information subcarrier signals by the fast inverse Fourier transforming part 3, and then, calculating, on the basis of this time waveform, complex redundant subcarrier signals to be added.

In addition, the complex redundant subcarrier signal generating part 4 may be designed, for example, so that it previously finds complex redundant subcarrier signals to reduce the maximum amplitude of a complex baseband time waveform of OFDM symbols for each information bit sequence, prepares a table of information bit sequences and complex redundant subcarrier signals, and outputs complex redundant subcarrier signals corresponding to the inputted information bit sequence. In this case, complex redundant subcarrier signals are inputted to the fast inverse Fourier transforming part 3 simultaneously with complex information subcarrier signals, and converted into a complex baseband time waveform.

Although Fig. 1 shows configuration to generate two complex redundant subcarrier signals, the number of complex redundant subcarrier signals can be any number as long as the sum of it and the number of complex information subcarrier signals is less than the input point number of the fast inverse Fourier transforming part 3.

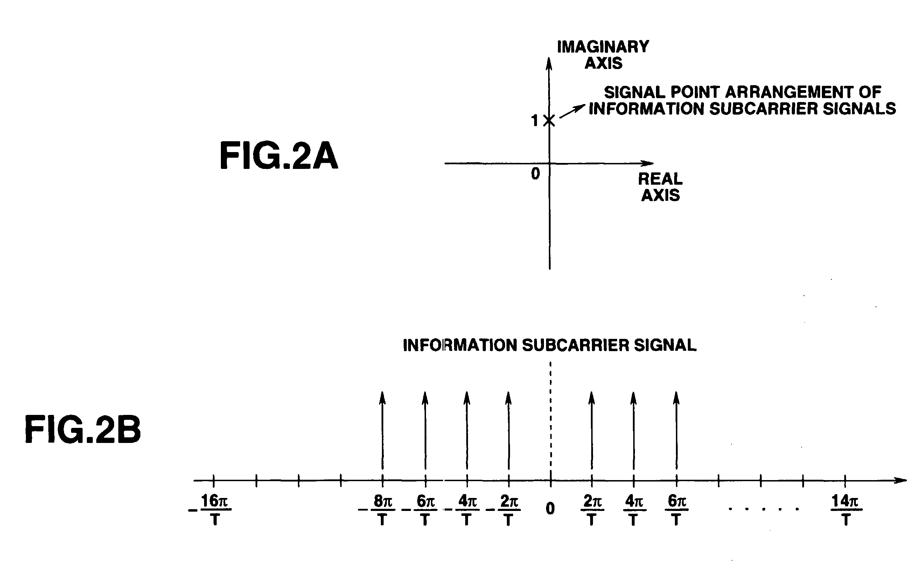

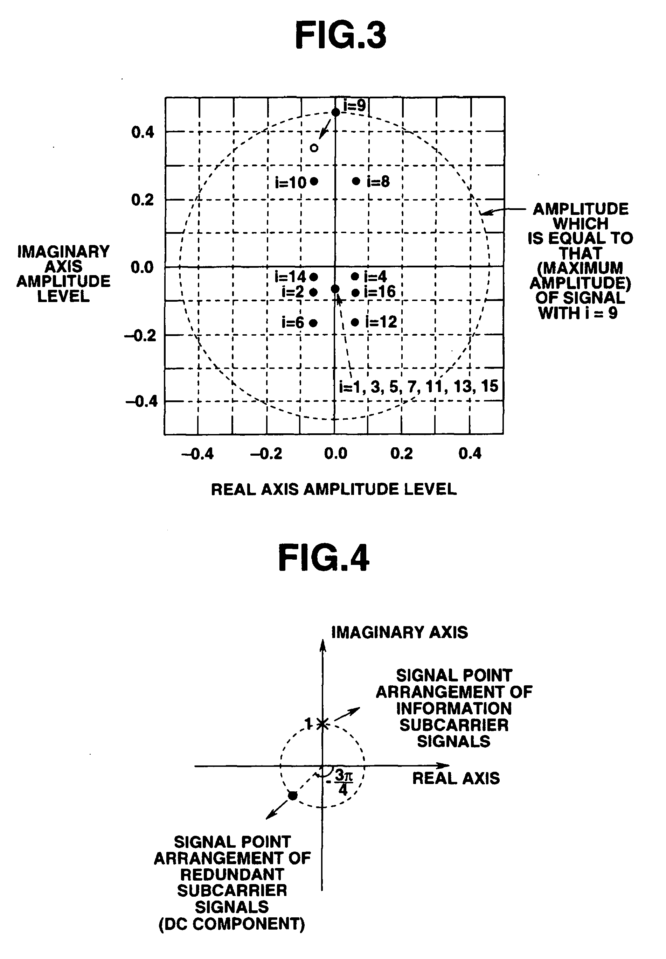

Now, operation of the embodiment constructed in such a manner will be described with reference to explanatory drawings in Figs. 2 A, 2 B, and 3. Fig. 2 A shows a signal point arrangement of complex information subcarrier signals on a complex plane formed with a real axis and an imaginary axis. Fig. 2B shows positions of information subcarrier signals on the frequency axis when the axis of abscissas expresses frequencies. Fig. 3 shows complex levels at each sampling point when a complex baseband time waveform of OFDM symbols is sampled at a plurality of sampling points i where the axis of abscissas expresses real axis amplitude level and the axis of ordinates expresses imaginary axis amplitude level.

An inputted information bit sequence is, after being modulated at the modulating part 1, supplied to the serial-to-parallel converting part 2 to be converted into parallel complex information subcarrier signals. The complex information subcarrier signals are supplied to the fast inverse Fourier transforming part 3.

The complex redundant subcarrier signal generating part 4 generates complex redundant subcarrier signals to reduce the maximum amplitude of a complex baseband time waveform of OFDM symbols obtained by fast inverse Fourier transformation of complex information subcarrier signals.

Now, a description will be given on the assumption that the fast inverse Fourier transforming part 3 is composed of 16 input points and 16 output points, and seven complex information subcarrier signals are outputted from the serial-to-parallel converting part 2 in parallel. And, signal points of all seven complex information subcarrier signals are supposed to be expressed with raised "e" to the j-th power as shown in Fig. 2A (where "j" expresses imaginary units). Frequencies of these complex information subcarrier signals are supposed to be $\pm 2\pi/T$, $\pm 4\pi/T$, $\pm 6\pi/T$, and -8$\pi/T$, respectively as shown in Fig. 2 B when the length of an OFDM symbol is "T".

The fast inverse Fourier transforming part 3 gives fast inverse Fourier transformation to seven complex information subcarrier signals inputted in parallel and two complex redundant subcarrier signals in order to obtain a complex baseband time waveform of OFDM symbols. This complex baseband time waveform is composed of 16 samples outputted from 16 output points of fast inverse Fourier transformation.

Now, suppose that a complex baseband time waveform of OFDM symbols, which are generated by fast inverse Fourier transforming process given to only seven complex information subcarrier signals, is expressed with dots shown in Fig. 3 expressing complex amplitude levels at each of 16 sampling points, i = I to 16. Fig. 3 shows that the amplitude of OFDM symbols becomes largest when the sampling number i of a discrete-time waveform of fast inverse Fourier transformation output is 9.

In this embodiment, complex redundant subcarrier signals are set so that the amplitude of discrete-time waveform reduces at a sampling number (i = 9), where amplitude becomes maximum. In this case, the complex redundant subcarrier signal generating part 4 sets frequencies of complex redundant subcarrier signals to be added to frequencies other than ones in which complex information subcarrier signals already exist. That is, frequencies of complex redundant subcarrier signals are set to frequencies, in the example in Fig. 2 B, other than $\pm 2\pi/T$, $\pm 4\pi/T$, $\pm 6\pi/T$, and -8$\pi/T$. Frequencies of complex redundant subcarrier signals may be set to any frequency, assuming a complex information subcarrier signal to be non existent. The number to set may be 1 or more.

As described above, complex redundant subcarrier signals from the complex redundant subcarrier signal generating part 4 are given to the fast inverse Fourier transforming part 3 together with complex information subcarrier signals from the serial-to-parallel converting part 2. At the fast inverse Fourier transforming part 3, fast inverse Fourier transforming process is given to complex information subcarrier signals added with complex redundant subcarrier signals so as to convert them into a complex baseband time waveform of OFDM symbols.

The circle drawn with a broken line in Fig. 3 expresses amplitude equal to that of discrete-time waveform at i = 9. As a result of addition of complex redundant subcarrier signals, maximum value of amplitude will be reduced if a sample of a complex baseband time waveform is arranged so as to be inside the broken lined circle at all of the sampling points i.

For example, when a sample of a complex baseband time waveform at i = 9 is moved to the white dot due to addition of complex redundant subcarrier signals, it means that the maximum value of amplitude is reduced. However, if amplitude of a sample of a complex baseband time waveform at i = 9 keeps on decreasing and a sample of a complex baseband time waveform at other sampling points i moves outside the circle, it shows that maximum value of amplitude results, on the contrary, in increase. Consequently, amplitude of discrete-time waveform at all sampling points must be considered.

The OFDM symbol, whose complex baseband time waveform has its level reduced within a predetermined range, is supplied to the transmitting part 5. The transmitting part 5 gives transmitting processes to a generated complex baseband time waveform, processes such as guard time adding process in order to absorb delay wave components caused by multipath, D/A converting process, amplifying process on transmission signals and frequency converting process, so as to generate transmission signals. The transmission signals are transmitted from the antenna 6.

Naturally, it is unnecessary to add complex redundant subcarrier signals when amplitude of a complex baseband time waveform, which is generated from complex information subcarrier signals only, is relatively not large.

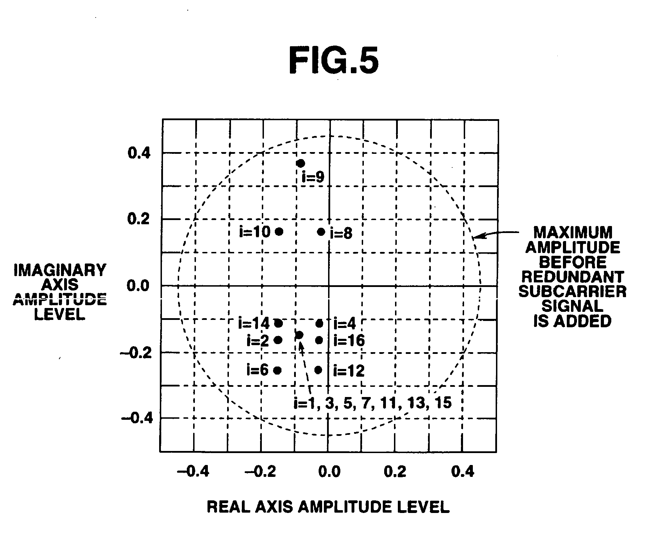

Next, with reference to Figs. 4 and 5, complex redundant subcarrier signals to be added and changes caused by the addition in a complex baseband time waveform of OFDM symbols will be described in detail. Fig. 4 is an explanatory drawing to show a signal point arrangement of redundant subcarrier signals on a complex plane, and Fig. 5 is an explanatory drawing corresponding to Fig. 3.

Now, suppose that complex redundant subcarrier signals of DC components are generated at the complex redundant subcarrier signal generating part 4. Fig. 4 is an example of a signal point arrangement to show complex redundant subcarrier signals of DC components. As shown in Fig. 4, it is supposed to be the value of "e" raised to the -j3$\pi/4$th power. With this complex redundant subcarrier signal, maximum value of amplitude can be reduced at the sampling point i = 9 of a complex baseband time waveform of OFDM symbols in Fig. 3, which is generated from complex information subcarrier signals shown in Fig. 2 B.

A complex redundant subcarrier signal is inputted to the fast inverse Fourier transforming part 3 as a signal in frequency 0. A complex redundant subcarrier signal, as its frequency is 0, becomes a complex baseband DC signal when converted into a complex baseband time waveform. Consequently, when complex redundant subcarrier signals shown in Fig. 4 are added, a given amount of signals of a complex baseband time waveform, which has been generated from complex information subcarrier signals only, will be shifted.

Fig. 5 shows a complex baseband time waveform obtained from the fast inverse Fourier transforming part 3 when DC components shown at the signal point in Fig. 4 (frequency is 0) are added as complex redundant subcarrier signals to a complex baseband time waveform of OFDM symbols shown in Fig. 3.

The complex baseband time waveform shown in Fig. 5 forms a waveform of a shifted complex baseband time waveform shown in Fig. 3 generated from seven complex information subcarrier signals. As shown in Fig. 5, the amplitude at the sampling point i = 9 is found to become smaller than the amplitude at the sampling point i = 9 in Fig. 3.

Since amplitude at other sampling points i is also smaller than the maximum amplitude at the sampling point i = 9 in Fig. 3, it is found that the maximum amplitude is reduced by DC component added as complex redundant subcarrier signals. This reduces the maximum instantaneous power, and reduction in backoff of a transmitting power amplifier becomes possible. Besides, since complex redundant subcarrier signals are DC components, phase and amplitude of complex redundant subcarrier signals can be set easily.

Thus, according to this embodiment, maximum amplitude can be successfully reduced comparing to a complex baseband time waveform of OFDM symbols generated from only complex information subcarrier signals by generating complex redundant subcarrier signals, in frequencies other than those where complex information subcarrier signals exist, so as to reduce amplitude of a complex baseband time waveform of OFDM symbols, and by generating a complex baseband time waveform of OFDM symbols by fast inverse Fourier transformation after adding complex redundant subcarrier signals to complex information subcarrier signals, without influencing information subcarrier signals.

That is, since maximum instantaneous power of OFDM signals is reduced, reduction in the backoff amount of a transmitting power amplifier becomes possible. In addition, since it is configured simply by adding the complex redundant subcarrier signal generating part 4 to an OFDM signal transmitting apparatus, a related technique, increase in the apparatus scale is relatively small.. Besides, since complex redundant subcarrier signals to be added do not depend on a fixed signal point arrangement of output of the modulating part 1, amplitude and phase can be set freely, giving a wide controlling range to amplitude control of a complex baseband time waveform of OFDM symbols.

Although complex redundant subcarrier signals are supposed to be DC components in Figs. 4 and 5, it is apparent that they do not have to be DC components.

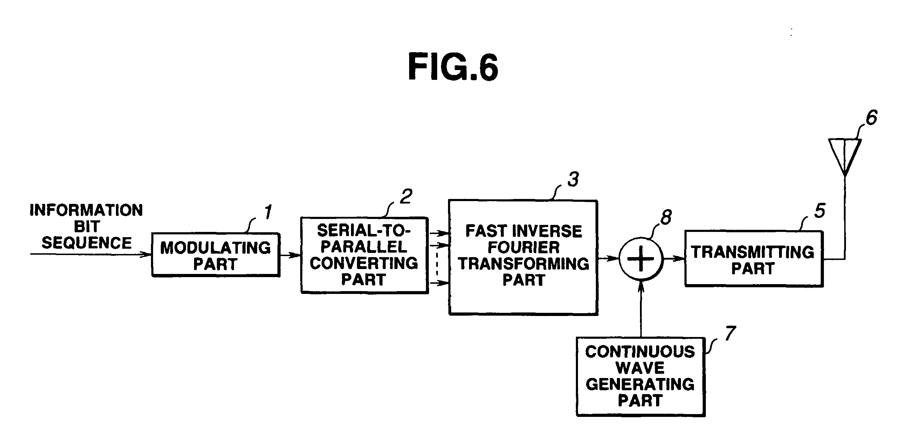

Fig. 6 is a block diagram showing an example useful for understanding the present invention. In Fig. 6, the same components as those in Fig. 1 are given the same numbers, and descriptions about them are omitted. This example is designed to reduce amplitude of a complex baseband time waveform of OFDM symbols to be transmitted not by adding complex redundant subcarriers but by adding complex baseband continuous waves.

This example differs from the embodiment shown in Fig. 1 in that the complex redundant subcarrier signal generating part 4 is deleted and a continuous wave generating part 7 and an adder 8 are provided. That is, to the fast inverse Fourier transforming part 3, only complex information subcarrier signals from the serial-to-parallel converting part 2 are supplied.

The fast inverse Fourier transforming part 3 transforms only complex information subcarrier signals into a complex baseband time waveform of OFDM symbols. The complex baseband time waveform from the fast inverse Fourier transforming part 3 is designed to be supplied to the transmitting part 5 through the adder 8.

The continuous wave generating part 7 generates complex baseband continuous waves in frequencies where complex information subcarrier signals do not exist. A complex baseband continuous wave to be generated has amplitude and phase which can reduce the maximum value of the amplitude (power) of a complex baseband time waveform generated from complex information subcarrier signals.

Similarly to the embodiment shown in Fig. 1, the continuous wave generating part 7 may generate a complex baseband continuous wave by calculating amplitude and phase of a complex baseband continuous wave from a sample of a complex baseband time waveform when amplitude becomes maximal. Or the continuous wave generating part 7 may also be designed to have complex baseband continuous waves, which correspond to information bit sequence or complex information subcarrier signals, previously provided as a table, and to generate a complex baseband continuous wave using this table.

The adder 8 is designed to add a complex baseband continuous wave from the continuous wave generating part 7 to a complex baseband time waveform of OFDM symbols from the fast inverse Fourier transforming part 3 before outputting them to the transmitting part 5.

Another configuration is the same as that of the embodiment shown in Fig. 1.

Next, a description will be given on operation of the example configured in this manner.

An information bit sequence is modulated by the modulating part 1, and converted into parallel complex information subcarrier signals at the serial-to-parallel converting part 2. Complex information subcarrier signals are converted into a complex baseband time waveform of OFDM symbols by the fast inverse Fourier transforming part 3.

The continuous wave generating part 7, on the other hand, generates a complex baseband continuous wave which has amplitude and phase to reduce the maximum value of amplitude (power) of a complex baseband time waveform generated from complex information subcarrier signals, and is in frequencies where complex information subcarrier signals do not exist. A complex baseband time waveform of OFDM symbols from the fast inverse Fourier transforming part 3 and a complex baseband continuous wave are added at the adder 8 and supplied to the transmitting part 6.

Since the complex baseband continuous wave has been set to frequencies where no complex information subcarrier signals exist, output of the adder 8 can reduce the maximum value of amplitude of a complex baseband time waveform from the fast inverse Fourier transforming part 3 without giving influence on information components by complex information subcarriers.

The transmitting part 5 gives predetermined transmitting processes to output of the adder 8, and has it transmitted from the antenna 6.

Other operation is similar to that of the embodiment shown in Fig. 1.

Thus, in this example the same signals as complex redundant subcarrier signals added in the configuration in Fig. 1 are added as a complex baseband continuous wave. With this, effects similar to those in the embodiment shown in Fig. I can be obtained in this embodiment. That is, by adding a complex baseband continuous wave, it is possible to reduce the maximum amplitude of a complex baseband time waveform of OFDM symbols generated from only complex information subcarrier signals. A fall in maximum instantaneous power enables reduction in backoff amount of a transmitting power amplifier.

In this example , too, it is apparent that there is no necessity to add a complex baseband continuous wave when amplitude of a complex baseband time waveform generated from only complex information subcarrier signals is relatively small.

Another advantage of this example is that it simplifies the setting of amplitude and phase compared to the embodiment shown in Fig. 1, because it can calculate the amplitude and phase of a complex baseband continuous wave to be added after a complex baseband time waveform is generated.

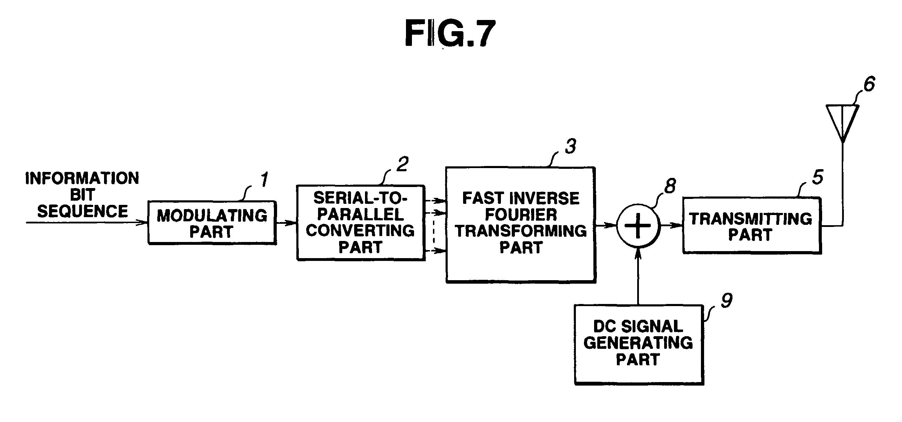

Fig. 7 is a block diagram showing another example useful for understanding the present invention. In Fig. 7, the same components as those in Fig. 6 are given the same numbers, and descriptions of them are omitted. This example is designed to add complex baseband DC signals instead of a complex baseband continuous wave.

This example differs from the example shown in Fig. 6 in that a DC signal generating part 9 is provided instead of the continuous wave generating part 7. The DC signal generating part 9 is designed to generate complex baseband DC signals having amplitude and phase which are able to reduce the maximum value of amplitude (power) of a complex baseband time waveform generated from complex information subcarrier signals, and to output them to the adder 8. The method of generating complex baseband DC signals at the DC signal generating part. 9 is similar to the method of generating a complex baseband continuous wave at the continuous wave generating part 7.

Another configuration is the same as that of the example shown in Fig. 6.

In an example configured in such a manner, the DC signal generating part 9 generates complex baseband DC signals having amplitude and phase which are able to reduce the maximum value of amplitude (power) of a complex baseband time waveform generated from complex information subcarrier signals. The adder 8 adds complex baseband DC signals from the DC signal generating part 9 to a complex baseband time waveform of OFDM symbols from the fast inverse Fourier transforming part 3, and outputs them to the transmitting part 5.

In this case, a complex baseband time waveform outputted from the adder 8 is found to be the one, where maximum amplitude of a complex baseband time waveform of OFDM symbols from the fast inverse Fourier transforming part 3 is shifted in the direction to reduce.

Another operation is similar to that of the example shown in Fig. 6.

Thus, the same effect as that of the example shown in Fig. 6 can be obtained. An additional advantage is that, since it is configured so that complex baseband DC components are added, phase setting of complex baseband DC signals is easier compared to the embodiment shown in Fig. 6.

In each of said embodiments and examples, complex redundant subcarrier signals, complex baseband continuous waves or complex baseband DC components do not have influence on complex information subcarrier signals to transmit information bit sequence, and only instantaneous maximum amplitude of a complex baseband time waveform of OFDM symbols to be generated is controlled. Consequently, the receiving side needs no particular apparatus but can receive with an ordinary receiving apparatus.

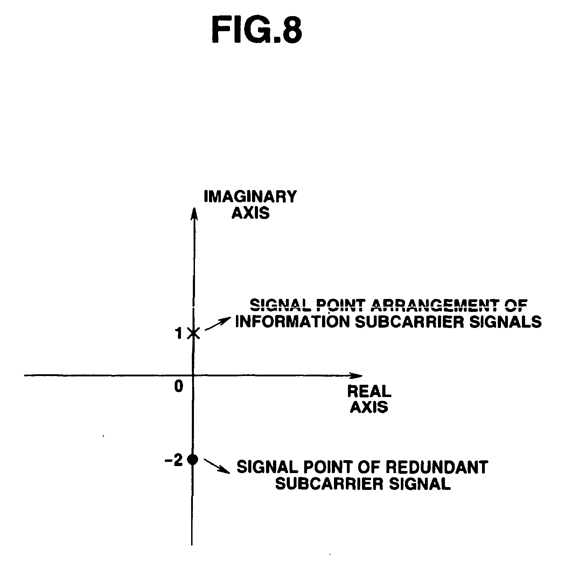

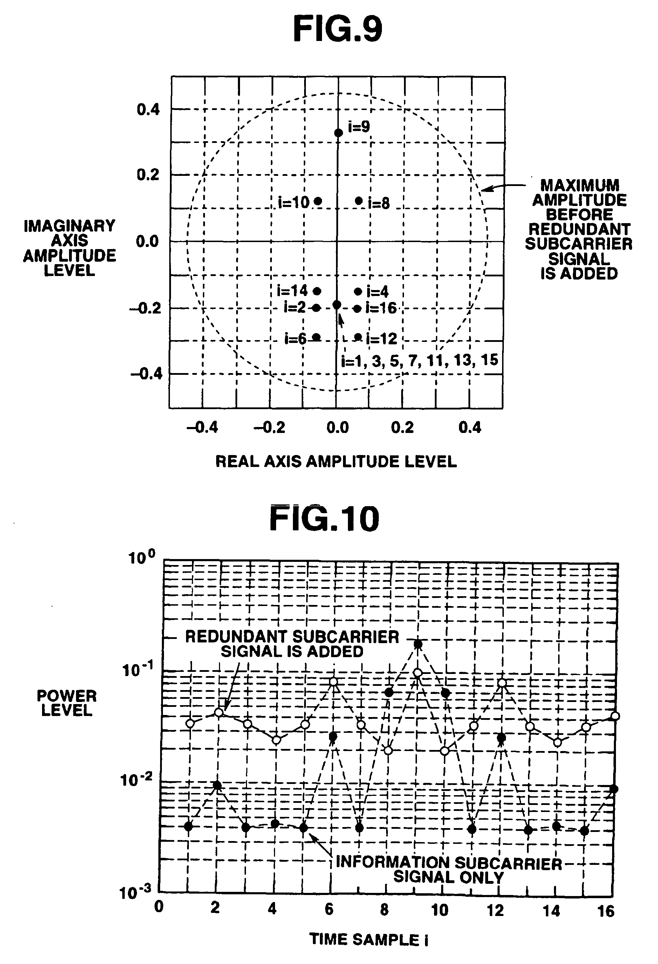

By the way, phase setting becomes simple not only in the example in Fig. 6 but also in that shown in Fig. 1 by adding complex redundant subcarrier signals of DC components. With reference to Fig. 8 to Fig. 10, a description will be given on an example where complex redundant subcarrier signals of DC components or complex baseband DC signals are added. Fig. 8 is an explanatory drawing to show a signal point arrangement of redundant subcarrier signals on a complex plane, and Fig. 9 is an explanatory drawing corresponding to Fig. 3. Fig. 10 is a graph to show changes in power level of a complex baseband time waveform before and after addition of complex redundant subcarrier signals of DC components when the axis of abscissas expresses time sampling points i and the axis of ordinates expresses power level.

In order to drastically reduce the maximum amplitude of a complex baseband time waveform, all that is required is that the phase is set to shift to be antiphase to the phase of a sample of a complex baseband time waveform when the amplitude becomes maximal. That is, it is enough if the phase of the DC component to be added, such as complex redundant subcarrier signals or complex baseband DC signals, is antiphase to the phase of a sample of a complex baseband time waveform when amplitude becomes maximal.

Now, suppose that complex redundant subcarrier signals, which are DC component to reduce the maximum amplitude drastically, are added to complex information subcarrier signals shown in Fig. 3. In this case, all required is to set signal points of complex redundant subcarrier signals to be antiphase to the phase of a sampling point where amplitude of a complex baseband time waveform shown in Fig. 3 becomes maximal (i = 9). That is, the phase of complex redundant subcarrier signals of DC components is set to $-\pi/2$.

The amplitude of complex redundant subcarrier signals of DC components is set so that the amplitude of a complex baseband time waveform after shifting at sampling points, except the sampling point i = 9, does not exceed the maximum amplitude of a complex baseband time waveform before shifting. Here, as an example, amplitude is supposed to be 2. Consequently, a signal point of complex redundant subcarrier signals of DC components is set as shown in Fig. 8.

In a case where complex redundant subcarrier signals of DC components shown in Fig. 8 are added to complex information subcarrier signals, a complex baseband time waveform generated by fast inverse Fourier transformation turns out to be the one shown in Fig. 9. As apparent in comparison between Figs. 3 and 9, maximum value of amplitude at the sampling point i = 9 is significantly reduced.

Thus, by setting a signal point of complex redundant subcarrier signals or complex baseband DC signals, DC compounds, to be antiphase to a sample of a complex baseband time waveform when amplitude becomes maximal, the maximum value of amplitude can be reduced efficiently. In order to set to anti-phase, all that is required is to calculate the phase of a sample of a complex baseband time waveform when amplitude becomes maximal. Compared with a case, where components other than DC components are added, phase setting of complex redundant subcarrier signals of DC components or complex baseband DC signals is simpler.

Fig. 10 shows power of OFDM symbols generated from only complex information subcarrier signals and power of OFDM symbols generated after addition of complex redundant subcarrier signals of DC components in Fig. 8. As shown in Fig. 10, it is found that instantaneous maximum power is reduced to half by adding complex redundant subcarrier signals. Thus, since instantaneous maximum power is reducible, reduction in backoff amount of a transmitting power amplifier becomes possible.

As stated above, while it is effective to calculate phase and amplitude of complex redundant subcarrier signals or complex baseband continuous waves on the basis of a complex baseband time waveform generated from complex information subcarrier signals, instantaneous setting of complex redundant subcarrier signals or complex baseband time waveforms becomes possible by previously preparing a table showing the relation to complex redundant subcarrier signals corresponding to an information bit sequence or complex information subcarrier signals, or to complex baseband continuous waves.

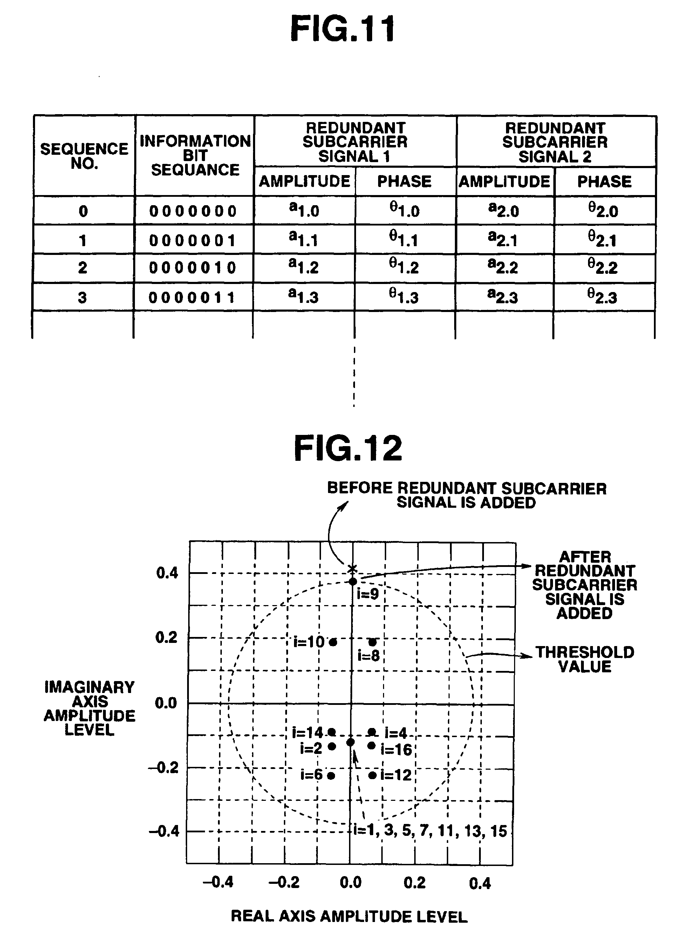

Fig. 11 is an explanatory drawing showing an example of such a table where two complex redundant subcarrier signals are added.

In Fig. 11, the example shows a case where two complex redundant subcarrier signals are generated when complex information subcarrier signals are generated on the basis of a 7-bit information bit sequence. That is, for each information bit sequence, amplitude and phase of the complex redundant subcarrier signal 1 and the complex redundant subcarrier signal 2 to reduce the maximum amplitude of a complex baseband time waveform are shown.

Since 128 combinations are possible for 7-bit information bits, it is necessary to previously calculate amplitude and phase of the complex redundant subcarrier signal I and the complex redundant subcarrier signal 2 respectively, and to set them for 128 kinds of information bit sequences. By preparing a table of complex redundant subcarrier signals, it becomes possible to set complex redundant subcarrier signals or complex baseband continuous waves instantly.

It is apparent that the receiving side need not prepare the table, and can demodulate complex information subcarrier signals by ordinary processes to receive OFDM signals.

It is not always necessary to set the maximum amplitude of a complex baseband time waveform of OFDM symbols to minimum as long as it is below a predetermined threshold value. Fig. 12 is an explanatory drawings illustrating a threshold value. Fig. 12 corresponds to Fig. 3.

A threshold value is set for amplitude or power of a complex baseband time waveform of OFDM symbols to be sent, then, the amplitude of complex redundant subcarrier signals of DC components or complex baseband DC signals, is set so that a whole complex baseband time waveform is shifted by the amount which exceeded the threshold value.

Now, suppose that a complex baseband time waveform of OFDM symbols generated from information subcarrier signals is as shown in Fig. 3. In Fig. 12, the threshold value of amplitude is expressed in a broken line. As shown in Fig. 12, amplitude, which is smaller than maximum amplitude of a complex baseband time waveform shown in Fig. 3, is set as the threshold value.

In this case, since the maximum amplitude of a complex baseband time waveform based on complex information subcarriers is larger than the threshold value of set amplitude, a complex baseband time waveform is shifted so that the maximum value of the complex baseband time waveform stays within the threshold value. The direction to shift is antiphase to the phase of a sample of a complex baseband time waveform when amplitude becomes maximal. The amount to shift is the one which exceeded the threshold value.

That is, a phase of complex redundant subcarrier signals of DC components or complex baseband DC signals to be added, is set to be antiphase to a sample of a complex baseband time waveform when amplitude becomes maximal, and amplitude is set to the amplitude of the difference from the threshold value. Fig. 12 shows a complex baseband time waveform obtained by adding complex redundant subcarrier signals of DC components or complex baseband DC signals set in such a manner.

When complex redundant subcarrier signals of DC components or complex baseband DC signals are added, amplitude at all sampling points i of a complex baseband time waveform becomes a value within the threshold value. Consequently, a maximum value of amplitude of a complex baseband time waveform is limited to be within the threshold value, and reduction in maximum instantaneous power becomes possible. Amplitude of complex redundant subcarrier signals of DC components or complex baseband DC signals can also be calculated easily

In this case, too, it is apparent that addition of complex redundant subcarrier signals or complex baseband DC signals are not necessary when the amplitude of a complex baseband time waveform stays with the threshold value at all sampling points i.

Next, a concrete description will be given on a method of calculating the phase and amplitude of complex redundant subcarrier signals or complex baseband continuous waves on the basis of a complex baseband time waveform generated from complex information subcarrier signals.

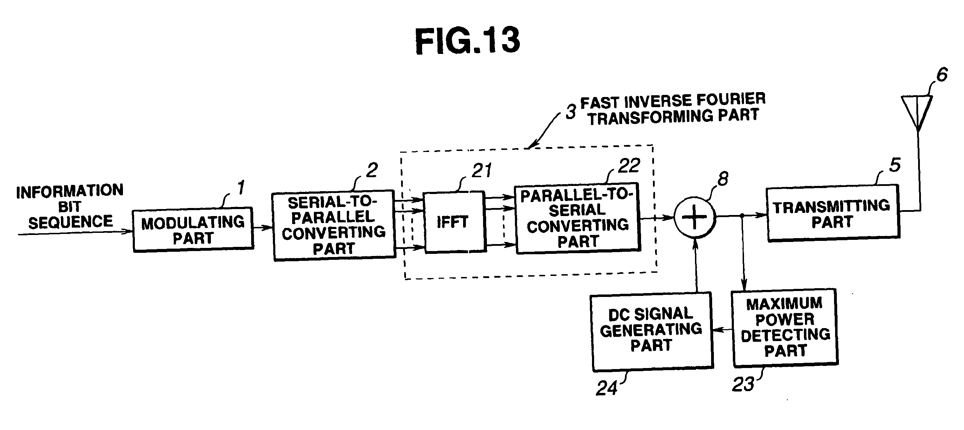

Fig. 13 is a block diagram showing a specific example useful for understanding the invention of that shown in Fig. 7, where it has become possible to calculate complex baseband DC signals so as to minimize the maximum amplitude of a complex baseband time waveform of OFDM symbols. In Fig. 13, the same components as those in Fig. 7 are given the same numbers, and descriptions about them are omitted.

The fast inverse Fourier transforming part 3 is composed of a fast inverse Fourier transforming circuit (hereinafter referred to as IFFT) 21 and a parallel-to-serial converting part 22. The IFFT 21 converts inputted complex information subcarrier signals into a time sample and outputs it to the parallel-to-serial converting part 22. The parallel-to-serial converting part 22 sequences inputted parallel data in series, and outputs a complex baseband time .waveform of OFDM symbols to the adder 8. The adder 8 adds complex baseband DC signals from a DC signal generating part 24 to output of the fast inverse Fourier transforming part 3 before outputting them to the transmitting part 5.

In this example output of the adder 8 is designed to be supplied also to a maximum power detecting part 23. The maximum power detecting part 23 detects a time sample when power (amplitude) of an inputted complex baseband time waveform becomes maximal, and outputs phase of the time sample to the DC signal generating part 24.

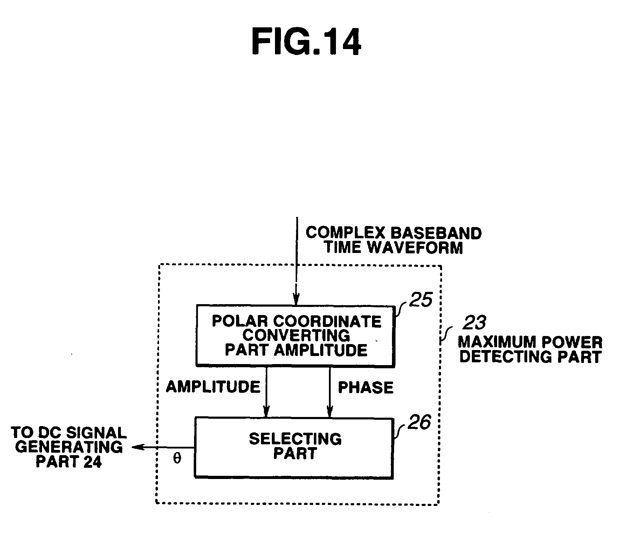

Fig. 14. is a block diagram showing a specific configuration of the maximum power detecting part 23 shown in Fig. 13.

The maximum power detecting part 23 is composed of a polar coordinate converting part 25 and a selecting part 26. The polar coordinate converting part 26 is configured with a Pythagorean processor and others, converts a complex baseband time waveform from the adder 8 into a polar coordinate and outputs its amplitude and phase to the selecting part 26. The selecting part 26 compares the amplitude of each time sample of the inputted complex baseband time waveform, and selects a time sample when amplitude becomes maximal, that is, when the power becomes maximal. The selecting part 26 is designed to output the phase $\theta$ of selected time sample to the DC signal generating part 24.

The DC signal generating part 24 is designed to generate complex baseband DC signals, which are antiphase to the phase $\theta$ from the maximum power detecting part 23, so as to reduce the maximum value of amplitude (power) of a complex baseband time waveform generated from complex information subcarrier signals, and to output them to the adder 8.

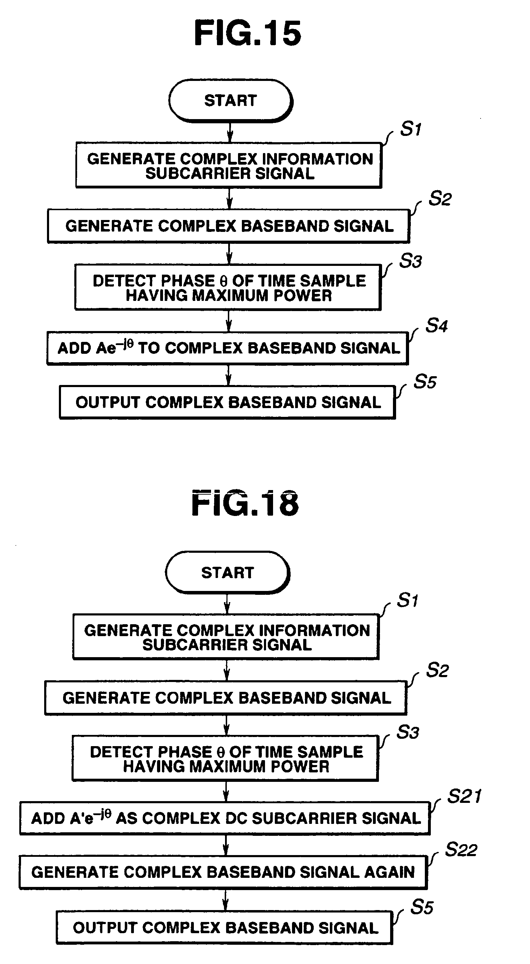

Next, operation of the example configured in such a manner will be described with reference to Fig. 15. Fig. 15 is a flow chart to explain operation of the example shown in Fig. 13.

In the step S1 in Fig. 15, complex information subcarrier signals are generated from an information bit sequence. That is, an information bit sequence is modulated by the modulating part 1, then, converted into parallel data by the serial-to-parallel converting part 2. In the next step S2, complex information subcarrier signals are given to the fast inverse Fourier transforming part 3 to be transformed into a complex baseband time waveform.

The complex baseband time waveform from the fast inverse Fourier transforming part 3 is supplied to the maximum power detecting part 23 through the adder 8. At this point of time, the DC signal generating part 24 does not have to output signals to the adder 8. It may be also designed to output a predetermined initial value. In the step S3, the maximum power detecting part 23 selects a time sample having the maximum power (amplitude) of a complex baseband time waveform of generated OFDM symbols, and detects the phase $\theta$ of the selected time sample.

Information on this phase θ is supplied to the DC signal generating part 24. The DC signal generating part 24 generates complex baseband DC signals ($Ae^{-j\theta}$) which is antiphase, to a time sample having a maximum amplitude or maximum power. "A" expresses amplitude of complex baseband DC signals, and "j" is an imaginary unit.

Complex baseband DC signals generated at the DC signal generating part 24 are given to the adder 8 to be added to each time sample of a complex baseband time waveform from the fast inverse Fourier transforming part 3 (step S4). This reduces instantaneous maximum power of a complex baseband time waveform of OFDM symbols.

In the next step S5, output of the adder 8 is supplied to the transmitting part 5 and transmitted from the antenna 6.

Thus, in this example , instantaneous maximum power .of a complex baseband time waveform of OFDM symbols is reduced by detecting a time sample when power of a complex baseband time waveform generated from only complex information subcarrier signals becomes maximal, and adding complex baseband DC signals, which are antiphase to the time sample, to a complex baseband time waveform based on complex information subcarrier signals. This reduces backoff of a transmitting power amplifier, makes efficient power amplification possible, and realizes power conservation in a transmitting apparatus.

In addition in Fig. 13, since the configuration is simply added with only the maximum power detecting part 23 the DC signal generating part 24 and the adder 8, increase in the apparatus scale is relatively small and instantaneous power of a complex baseband time waveform of OFDM symbols can be reduced. Besides, since complex baseband DC signals to be added do not depend on the mapping method of the modulating part 1, amplitude and phase can be set freely.

Though, in Fig. 13, it is configured so that maximum power is detected after conversion into a complex baseband time waveform by the parallel-to-serial converting part 22, it may also be configured so that a parallel time sample before parallel-to-serial conversion is supplied to the maximum power detecting part 23. Similarly, the configuration, where complex baseband DC signals outputted from the DC signal generating part 24 are added at the adder 8 after parallel-to-serial conversion, may also be so that complex baseband DC signals are added to each parallel time sample before serial conversion.

In Fig. 15, instantaneous maximum power of complex baseband signals is reduced by adding complex baseband DC signals only once. However, instantaneous maximum power can be reduced more efficiently by repeating addition a plurality of times.

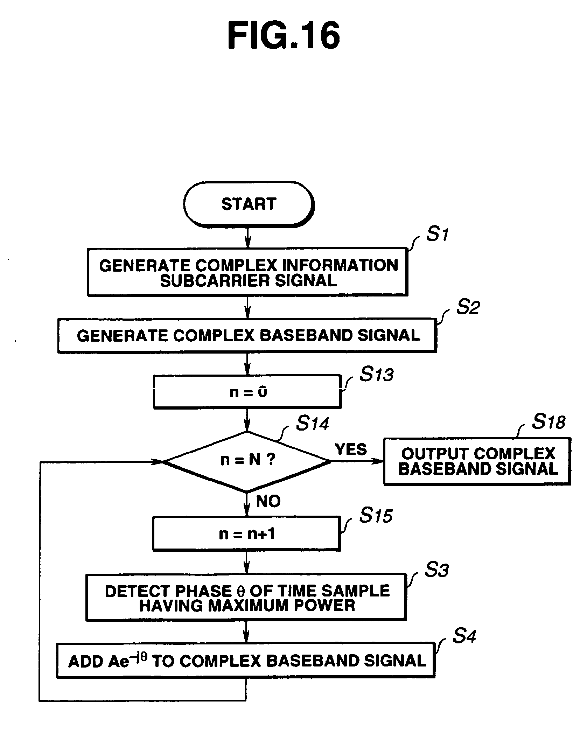

Fig. 16 is a flow chart to show operation flow in this case. In Fig. 16, the same procedures as those in Fig. 15 are given the same numbers, and descriptions about them are omitted.

The operation up to generation of a complex baseband time waveform based on an information bit sequence is similar to that in Fig. 15. In the step S13 in Fig. 16, the number of times to add, "n", is initialized to 0. In the next step S 14, it is decided whether "n" has reached a set number of times "N". In the succeeding step S15, "n" is incremented and goes on to the process in the step S3.

In the step S3, the phase θ of a time sample having maximum power is detected at the maximum power detecting part 2'3, and complex baseband DC signals, which are antiphase to this phase θ, are generated at the DC signal generating part 24. In the next step S4, at the adder 8, complex baseband DC signals from the DC signal generating part 24 are added to a complex baseband time waveform based on an information bit sequence.

This reduces the maximum amplitude of a complex baseband time waveform from the adder 8. In the next step S14, whether "n" has reached "N" is decided. When "N" is two or more, processes in the steps S15, S3, S4 are repeated again for the second adding process.

This further reduces maximum amplitude of a complex baseband time waveform from the adder 8. After processes in the steps S3, S4 are repeated "N" times, the process goes on to the step S 18 where a complex baseband time waveform from the adder 8 is transmitted by the transmitting part 5.

When "N" is set to 0, a complex baseband time waveform based on an information bit sequence is transmitted as it is from the transmitting part 5 without adding complex baseband DC signals.

Thus, by repeating a plurality of times the process to detect a time sample having the maximum power (amplitude) of a complex baseband time waveform of OFDM symbols and the process to add complex baseband DC signals, which are antiphase to the time sample, reducing effect on instantaneous maximum power of a complex baseband time waveform of OFDM symbols can be increased more than in a case where complex baseband DC signals are added only once. Consequently, backoff of a transmitting power amplifier can be more reduced than in the case shown in Fig. 15. Thus, highly efficient power amplification becomes possible to realize a transmitting apparatus which reduces power consumption.

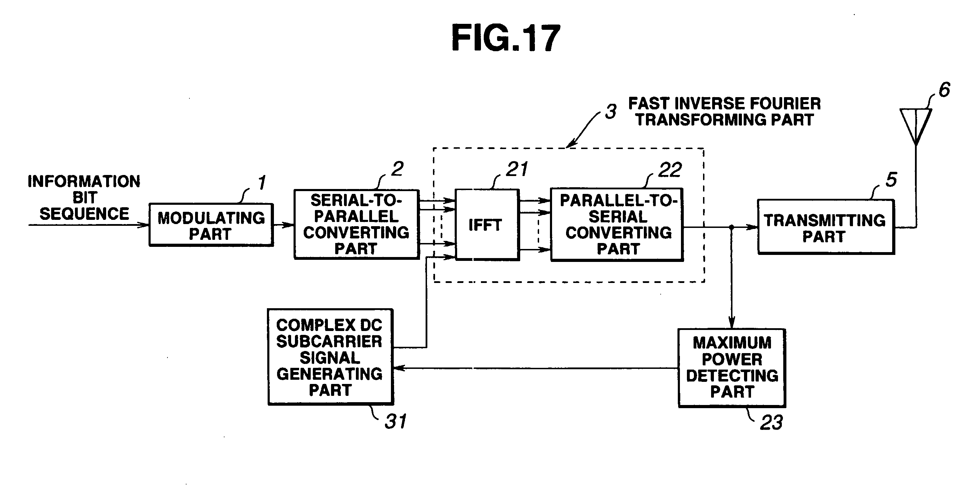

Fig. 17 is a block diagram showing another embodiment of the present invention. In Fig. 17, the same components as those in Fig. 13 are given the same numbers, and descriptions about them are omitted. This embodiment is an example where it is made possible to calculate complex redundant subcarrier signals of DC components for minimizing maximum amplitude of a complex baseband time waveform of OFDM symbols (hereinafter referred to as complex DC subcarrier signals).

This embodiment differs from the example in Fig. 13 in that the adder 8 is omitted and a complex DC subcarrier signal generating part 31 is provided instead of the DC signal generating part 24. In this embodiment, the maximum power detecting part 23 is designed to detect a time sample when power (amplitude) of a baseband time waveform of OFDM symbols from the fast inverse Fourier transforming part 3 becomes maximal, and to supply information on the phase θ to the complex DC subcarrier signal generating part 31.

The complex DC subcarrier signal generating part 31 is designed to generate complex DC subcarrier signals in anti-phase to the phase of a time sample when power (amplitude) becomes maximal, and to output them to the fast inverse Fourier transforming part 3. The generated complex DC subcarrier signals are inputted as DC components (frequency is 0) to the fast inverse Fourier transforming part 3, and converted into a plurality of time samples together with complex information subcarrier signals by the fast inverse Fourier transforming part 3.

Other configuration is similar to that of the example : in Fig. 13.

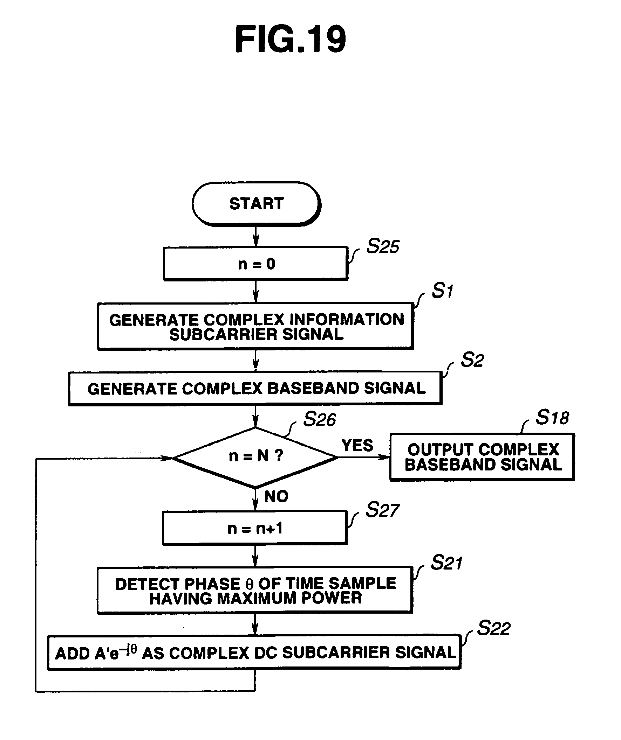

Next, operation of an embodiment configured in such a manner will be described with reference to Fig. 18. Fig. 18 is a flow chart illustrating operation of the embodiment in Fig. 17. In Fig. 18, the same procedures as those in Fig. 15 are given the same numbers, and descriptions about them are omitted.

In the step S1 in Fig. 18, complex information subcarrier signals are generated from an information bit sequence. That is, the information bit sequence, after being modulated by the modulating part 1, is converted into parallel data by the serial-to-parallel converting part 2.

Next, in the step S2, complex information subcarrier signals are given to the fast inverse Fourier transforming part 3 to be transformed into a complex baseband time waveform. At this point of time, a complex baseband time waveform of OFDM is obtained using only complex information subcarrier signals.

A complex baseband time waveform from the fast inverse Fourier transforming part 3 is supplied to the maximum power detecting part 23. In the step S3, a time sample having maximum power (amplitude) of a complex baseband time waveform is detected, and information on the phase θ of this time sample is supplied to the complex DC subcarrier signal generating part 31.

The complex DC subcarrier signal generating part 31 generates complex DC subcarrier signals ($A'e^{-j\theta}$) in anti-phase to a time sample having a maximum amplitude or maximum power. "A'" expresses amplitude of complex DC subcarrier signals.

Complex DC subcarrier signals generated at the complex DC subcarrier signal generating part 31 are added to complex information subcarrier signals as DC components (frequency is 0), then, given to the fast inverse Fourier transforming part 3 (the step S21).

The fast inverse Fourier transforming part 3, in the step S22, again generates a complex baseband time waveform of OFDM symbols from complex information subcarrier signals and complex DC subcarrier signals, redundant components. This reduces instantaneous maximum power of a complex baseband time waveform of OFDM symbols.

In the next step S5, output of the fast inverse Fourier transforming part 3 is supplied to the transmitting part 5 and transmitted from the antenna 6.

Thus, in this embodiment, instantaneous maximum power of a complex baseband time waveform of OFDM symbols is reduced by detecting a time sample when power (amplitude) of a complex baseband time waveform of OFDM symbols generated from only complex information subcarrier signals becomes maximal, and adding complex DC subcarrier signals, which are antiphase to the time sample, to complex information subcarrier signals. Since reduction in instantaneous maximum power reduces backoff of a transmitting power amplifier, highly efficient power amplification becomes possible to realize a transmitting apparatus which can reduce power consumption.

In addition, since this embodiment is configured by adding only the maximum power detecting part 23 and the complex DC subcarrier signal generating part 31, it is possible to reduce instantaneous maximum power of a complex baseband time waveform of OFDM symbols without extremely enlarging the apparatus scale. Besides, since complex DC subcarrier signals to be added do not depend on the mapping method of the modulating part 1, amplitude and phase can be set freely.

Although this embodiment is configured, similarly to the example in Fig. 18, so that output of the fast inverse Fourier transforming part 3 is converted into a complex baseband time waveform of OFDM symbols by the parallel-to-serial converting part 22 before maximum power is detected, it may also be configured so that a parallel time sample before parallel-to-serial conversion is inputted to the maximum power detecting part 23. The maximum power detecting part 23, in addition to outputting information on the phase θ to the complex DC subcarrier signal generating part 31, can be realized with the same configuration as that shown in Fig. 14.

In Fig. 18, instantaneous maximum power of complex baseband signals is reduced by adding complex DC subcarrier signals only once. However, when addition is repeated a plurality of times, instantaneous maximum power can be reduced more efficiently.

Fig. 19 is a flow chart to show operation flow in this case. In Fig. 19, the same procedures as those in Fig. 18 are given the same numbers, and descriptions about them are omitted.

In Fig. 19, first, times "n" to add is initialized to 0 in the step S25. In the following steps S1 and S2, the operation, where a complex baseband time waveform is generated based on an information bit sequence, is similar to that in Fig. 18.

In the step S26, whether "n" has reached a predetermined times "N" is decided. In the step S27, "n" is incremented, and goes on to the process in the step S21.

In the step S21, the phase θ of a time sample having maximum power is detected at the maximum power detecting part 23, and complex DC subcarrier signals, which are antiphase to this phase θ, are generated at the complex DC subcarrier signal generating part 31. In the next step S22, complex DC subcarrier signals are added to a complex baseband time waveform based on an information bit sequence, and supplied to the fast inverse Fourier transforming part 3.

In the step S2, a second fast inverse Fourier transforming process is given. The maximum amplitude of a complex baseband time waveform from the fast inverse Fourier transforming part 3 is more reduced than that after a first fast inverse Fourier transformation. In the next step S26, "n" is decided whether it has reached "N". When "N" is two or more, processes in the steps S27, S21, S22 are repeated again in order to perform a second adding process.

This further reduces the maximum amplitude of a complex baseband time waveform from the fast inverse Fourier transforming part 3. When the processes in the steps S21, S22 are repeated "N" times, the process goes on to the step S18, and a complex baseband time waveform from the fast inverse Fourier transforming part 3 is transmitted by the transmitting part 5.

When "N" is set to 0, a complex baseband time waveform based on an information bit sequence is transmitted as it is from the transmitting part 5 without adding complex baseband DC signals.

Thus, effects on reduction in instantaneous maximum power of a complex baseband time waveform of OFDM symbols is increased than in a case where complex DC subcarrier signals are added only once by detecting a time sample having a maximum power (amplitude) of a complex baseband time waveform of OFDM symbols, and giving a plurality of times a process to add complex DC subcarrier signals which are antiphase to the time sample. Consequently, bacakoff of a transmitting power amplifier can be further reduced than in the case in Fig. 18, highly efficient power amplification becomes possible, and a transmitting apparatus, which economizes power consumption, is realized.

In Figs. 16 and 19, the description was given on an example where instantaneous maximum power of a complex baseband time waveform of OFDM symbols is sufficiently reduced by adding complex baseband DC signals or complex DC subcarrier signals. However, when amplitude of complex baseband DC signals or complex DC subcarrier signals to be added is fluctuated correspondingly to times to add, "n", instantaneous maximum power of a complex baseband time waveform of OFDM symbols can be further reduced even when the set number of times "N" is small.

That is, when amplitude of complex baseband DC signals to be added for the n-th time is "An", particularly, if the amplitude is fluctuated so as to be $An < An-1$, it prevents instantaneous maximum power from diverging or rocking, and enables instantaneous maximum power to get converged efficiently at an optimum value.

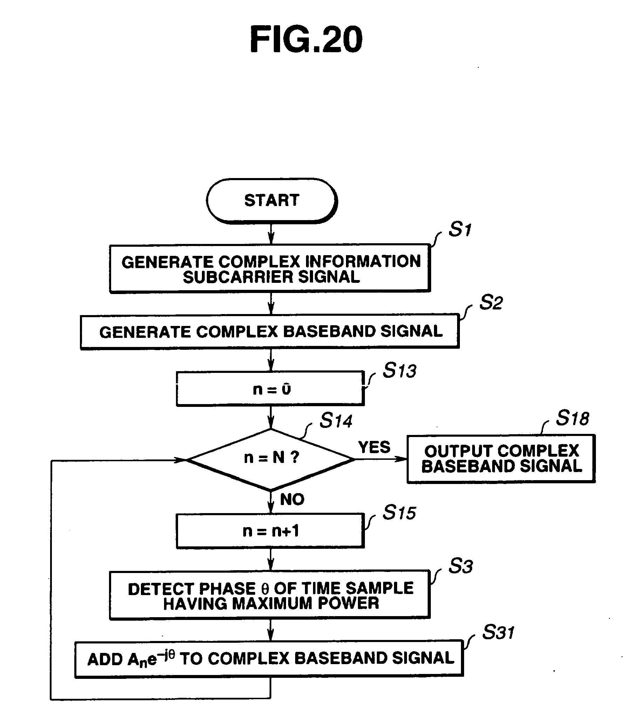

Fig. 20 is a flow chart illustrating the operation flow in this case. In Fig. 20, the same procedures as those in Fig. 16 are given the same numbers, and descriptions about them are omitted.

Fig. 20 shows a case where amplitude of complex baseband DC signals is fluctuated correspondingly to "n". It is apparent that a similar operation flow is possible when amplitude of complex DC subcarrier signals is fluctuated correspondingly to "n".

Fig. 20 differs from Fig. 16 in that a step S31 is provided instead of the step S4.

In the step S31, the DC signal generating part 24 is designed to generate complex baseband DC signals with amplitude "An", and to add this complex baseband DC signals to output of the fast inverse Fourier transforming part 3 by the adder 8.

Other procedures are similar to those in Fig. 16.

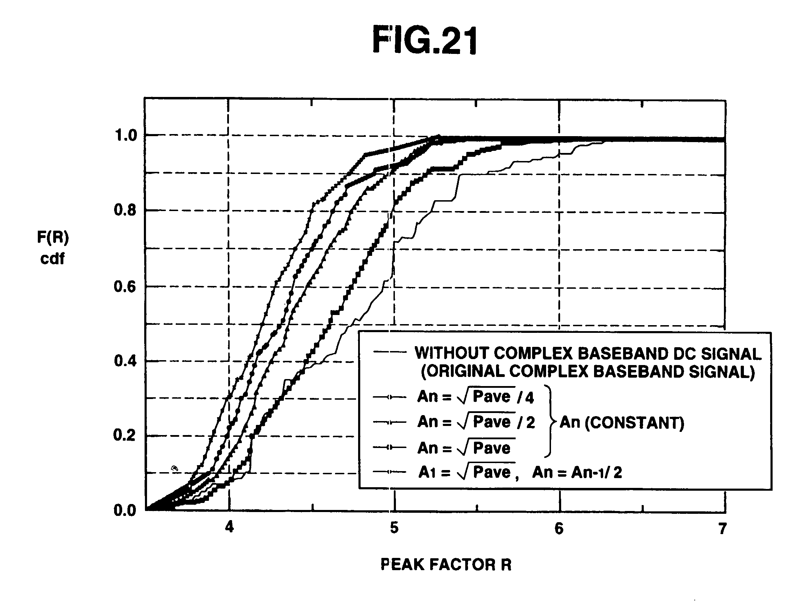

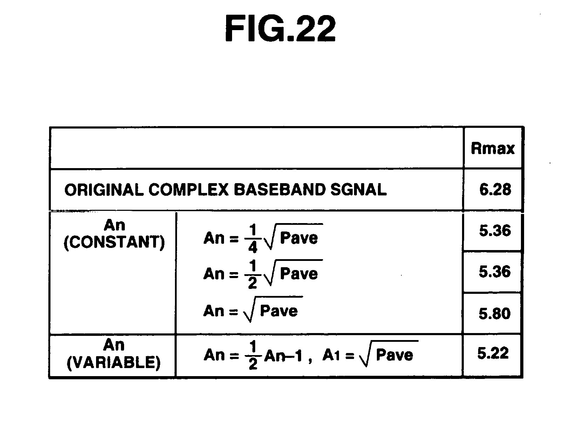

Now, a description will be given on effects on reduction in amplitude of a complex baseband time waveform when the flow in Fig. 20 is adopted with reference to Figs. 21 and 22. Fig. 21 is a graph to express effects on reduction in amplitude of a complex baseband time waveform with peak factor R on the axis of abscissas and cumulative distribution function (cdf) (F(R)) on the axis of ordinates. Fig. 22 is a chart to show maximum value, Rmax, of peak factor when cumulative distribution function F(R) is 0.99.

Now, suppose that the fast inverse Fourier transforming part 3 is composed of 16 input points, and seven complex information subcarrier signals are to be inputted. Frequencies of seven complex information subcarrier signals are supposed to be $\pm 2\pi/T$, $\pm 4\pi/T$, $\pm 6\pi/T$, $-8\pi/T$ respectively when OFDM symbol length is "T".

Fig. 21 shows a distribution of maximum amplitude of a complex baseband time waveform generated in this case. That is, Fig. 21 sets forth effects on amplitude reduction with cumulative distribution function (cdf) of instantaneous maximum amplitude of a complex baseband time waveform when amplitude "An" is set. The axis of abscissas expresses instantaneous maximum amplitude (peak factor R) normalized by ($\sqrt{P_{ave}}$), and the axis of ordinates expresses cumulative distribution function F(R) of peak factor R.

In Fig. 21, a solid line shows an example where complex baseband DC signals are not added. When the mean power of a complex baseband time waveform of OFDM symbols is supposed to be Pave, a black dot in a solid line in Fig. 21 is an example where

$$An = (1/4)\sqrt{P_{ave}}$$, a triangle in a solid line is an

example where $$An = (1/2)\sqrt{P_{ave}}$$, and a square in a solid line is an example where $$An = \sqrt{P_{ave}}$$.

That is, in these examples, amplitude "An" of complex baseband DC signals to be added does not depend on "n" but is constant.

Meanwhile, an "×" in a solid line in Fig. 21 is an example where amplitude "An" of complex baseband DC signals fluctuates, An = (1/2)An-1, and an initial value

$$A1 = \sqrt{P_{ave}} \ .$$

A set number "N" to add complex baseband DC signals is supposed to be N = 5.

As shown in Fig. 21, it is found that, both when "An" is constant and when "An" fluctuates correspondingly to "n", peak factor R, that is, instantaneous maximum amplitude is more reduced by adding complex baseband DC signals than a complex baseband time waveform of original OFDM symbols before addition of complex baseband DC signals.

It is also found that, when two cases are compared, a case where amplitude "An" of complex baseband DC signals does not depend on "n" but is constant and a case where "An" fluctuates correspondingly to "n", peak factor R (instantaneous maximum amplitude) is largely reduced when "An" fluctuates correspondingly to "n" than in any case where "An" is constant.

In Fig. 22, a value of peak factor R is found to be as Rmax for each case in Fig. 21 when a value of cumulative distribution function F(R) becomes 0.99. That is, Rmax expresses a value when peak factor R of 99 % of a complex baseband time waveform becomes same as or below Rmax.

As shown in Fig. 22, it is found that, by adding complex baseband DC signals, instantaneous maximum amplitude is reduced to 0.92 - 0.83 times compared to the original complex baseband time waveform before complex baseband DC signals are added. That is, power is reduced to 0.85 - 0.69 times, and this confirms that addition of complex baseband DC signals largely reduces instantaneous maximum power. It is found that, particularly when amplitude "An" of complex baseband DC signals fluctuates correspondingly to "n", reduction in maximum instantaneous amplitude (power) is largest.

Thus, Figs. 21 and 22 show that instantaneous maximum amplitude (power) can be reduced more largely when addition is done while amplitude "An" fluctuates correspondingly to "n" than when complex baseband DC signals of same amplitude are added. In other words, by making amplitude "An" fluctuate correspondingly to "n", instantaneous maximum amplitude (power) of a complex baseband time waveform of OFDM symbols can be reduced efficiently in a smaller number of times.

Although the description in Figs. 20 to 22 was given on examples where complex baseband DC signals are added, it is apparent that the description can also be applied to cases where complex DC subcarrier signals are added.

Although instantaneous maximum power (amplitude) of a complex baseband time waveform is largely reduced by adding complex baseband DC signals a plurality of times as shown in Fig. 20, when maximum instantaneous power is relatively small, a complex baseband time waveform may be outputted to the transmitting part 5, without repeating addition of complex baseband DC signals or complex DC subcarrier signals a previously determined set number "N" of times, after adding a number of times less than "N". When instantaneous maximum power before addition of complex baseband DC signals or complex DC subcarrier signals is small enough, complex baseband DC signals or complex DC subcarrier signals do not have to be added.

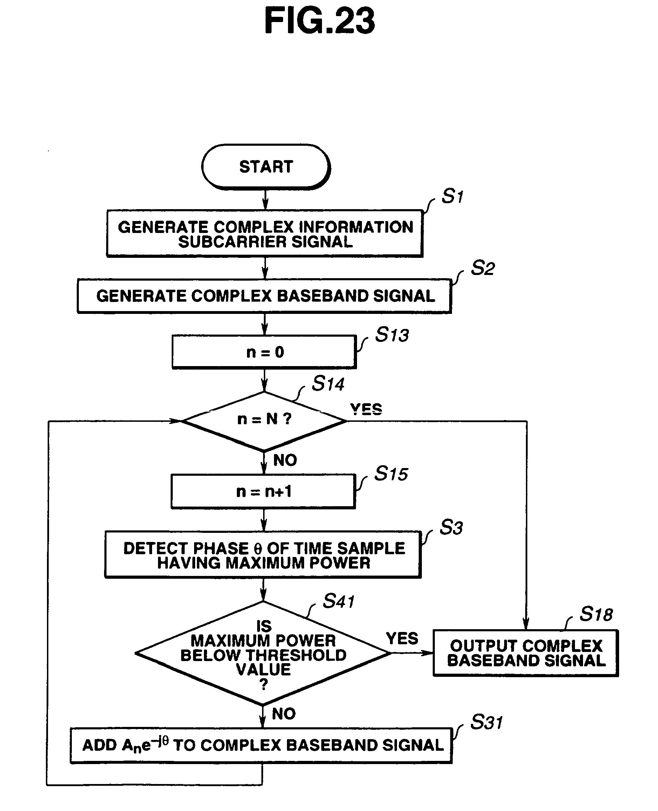

Fig. 23 is a flow chart to show an example where addition of complex baseband DC signals or complex DC subcarrier signals is designed to be performed a number of times less than "N", a set number, by detecting that instantaneous maximum power of a complex baseband time waveform has become smaller than a threshold value which is set previously. In Fig. 23, the same components as those in Fig. 20 are given the same numbers, and descriptions about them are omitted.

Fig. 23 differs from Fig. 20 in that a procedure in the step S41 is added. The process, after detecting a time sample having maximum power of a complex baseband time waveform in the step S3, goes on to the step S41. The step S41 decides whether maximum power is below a threshold value or not. If it is not below a threshold value, the process goes on to the next step S31 to perform addition of complex baseband DC signals, similarly in Fig. 20.

When maximum power is below a threshold value, the process proceeds to the step S18 so as to stop the process to add complex baseband DC signals, and to make output of the adder 8 transmitted from the transmitting part 5.

That is, the process to add complex baseband DC signals by the steps S3, S31 are repeated until either the number of times "n" to add complex baseband DC signals reaches the number "N", a previously set number of times, or instantaneous maximum power of a complex baseband time waveform falls below a previously set threshold value.

The process in the step S41 can be realized by the maximum power detecting part 23 in Fig. 14. The maximum power detecting part 23 selects a time sample when power of a complex baseband time waveform of OFDM symbols becomes maximal. The phase θ of the selected time sample may be detected at this time, or in a later step. Amplitude "An" may be constant without depending on "n", or may be made fluctuate correspondingly to "n".

Thus, when maximum instantaneous power is small enough, the process to add complex baseband DC signals can be stopped before adding complex baseband DC signals or complex DC subcarrier signals "N" times, realizing an efficient process.

Although, in Fig. 23, the description was given on an example where complex baseband DC signals are added in order to reduce instantaneous maximum power of a complex baseband time waveform of OFDM symbols, it is obvious that the same effect is obtained even when complex DC subcarrier signals are added.

## Claims

1. An apparatus for transmitting OFDM signals, comprising:

   converting means (3) for converting a plurality of frequency-domain complex subcarrier signals into a complex baseband time waveform of OFDM symbols; and
   complex redundant subcarrier generating means (4) for generating at least one frequency domain complex redundant subcarrier signal to reduce a maximum amplitude of the complex baseband time waveform of OFDM symbols output from said converting means (3) wherein said at least one frequency-domain complex redundant subcarrier signal is inputted into said converting means (3) with a plurality of frequency domain complex information subcarrier signals for transmitting information,

   **characterized in that** said apparatus comprises a table (4) to show the relation of information to be transmitted by said plurality of fiequency-domain complex information subcarrier signals with said at least one frequency domain complex redundant subcarrier signal to reduce the maximum amplitude of the complex baseband time waveform of said OFDM symbols.

## Patentansprüche

1. Vorrichtung zum Senden von OFDM-Signalen, umfassend:

   ein Umwandlungsmittel (3) zum Umwandeln mehrerer komplexer Frequenzbereichs-Hilfsträgersignale in eine komplexe Basisbandzeitwellenform von OFDM-Symbolen; und
   ein Mittel (4) zum Erzeugen komplexer redundanter Hilfsträger zum Erzeugen wenigstens eines komplexen redundanten Frequenzbereichs-Hilfsträgersignals zum Verringern einer maximalen Amplitude der komplexen Basisbandzeitwellenform von OFDM-Symbolen, die von dem Umwandlungsmittel (3) ausgegeben werden, wobei das wenigstens eine komplexe redundante Frequenzbereichs-Hilfsträgersignal mit mehreren komplexen Frequenzbereichs-Informationshilfsträgersignalen in das Umwandlungsmittel (3) eingespeist wird, um Informationen zu übermitteln,

   **dadurch gekennzeichnet, dass** die Vorrichtung eine Tabelle (4) umfasst, um die Beziehung von Informationen, die durch die mehreren komplexen Frequenzbereichs-Informationshilfsträgersignale zu übermitteln sind, zu dem wenigstens einen komplexen redundanten Frequenzbereichs-Hilfsträgersignals zu zeigen, um die maximale Amplitude der komplexen Basisbandzeitwellenform der OFDM-Symbole zu verringern.

## Revendications

1. Appareil pour transmettre des signaux OFDM, comprenant:

   un moyen de conversion (3) pour convertir une pluralité de signaux de sous-porteuse complexes du domaine des fréquences selon une forme d'onde de temps de bande de base complexe de symboles OFDM; et
   un moyen de génération de sous-porteuse redondant complexe (4) pour générer au moins un signal de sous-porteuse redondant complexe du domaine des fréquences afin de réduire une amplitude maximum de la forme d'onde de temps de bande de base complexe de symboles OFDM qui est émise en sortie depuis ledit moyen de conversion (3), dans lequel ledit au moins un signal de sous-porteuse redondant complexe du domaine des fréquences est entré dans ledit moyen de conversion (3) avec une pluralité de signaux de sous-porteuse d'information complexes du domaine des fréquences pour transmettre une information,

   **caractérisé en ce que** ledit appareil comprend une table (4) pour présenter la relation de l'information à transmettre au moyen de ladite pluralité de signaux de sous-porteuse d'information complexes du domaine des fréquences avec ledit au moins un signal de sous-porteuse redondant complexe du domaine des fréquences afin de réduire l'amplitude maximum de la forme d'onde de temps de bande de base complexe desdits symboles OFDM.

# FIG.1

INFORMATION BIT SEQUENCE → MODULATING PART (1) → SERIAL-TO-PARALLEL CONVERTING PART (2) → FAST INVERSE FOURIER TRANSFORMING PART (3) → TRANSMITTING PART (5) → antenna (6)

COMPLEX REDUNDANT SUBCARRIER SIGNAL GENERATING PART (4)

EP 0 932 285 B1

## FIG.2A

IMAGINARY
AXIS

SIGNAL POINT ARRANGEMENT OF
INFORMATION SUBCARRIER SIGNALS

1 ✗

0 ───────► REAL
AXIS

## FIG.2B

INFORMATION SUBCARRIER SIGNAL

$$-\frac{16\pi}{T} \quad -\frac{8\pi}{T} \quad -\frac{6\pi}{T} \quad -\frac{4\pi}{T} \quad -\frac{2\pi}{T} \quad 0 \quad \frac{2\pi}{T} \quad \frac{4\pi}{T} \quad \frac{6\pi}{T} \quad \cdots \cdots \quad \frac{14\pi}{T}$$

EP 0 932 285 B1

# FIG.3

IMAGINARY AXIS AMPLITUDE LEVEL

REAL AXIS AMPLITUDE LEVEL

AMPLITUDE WHICH IS EQUAL TO THAT (MAXIMUM AMPLITUDE) OF SIGNAL WITH i = 9

i=9

i=10

i=8

i=14

i=4

i=2

i=16

i=6

i=12

i=1, 3, 5, 7, 11, 13, 15

# FIG.4

IMAGINARY AXIS

SIGNAL POINT ARRANGEMENT OF INFORMATION SUBCARRIER SIGNALS

REAL AXIS

$\frac{3\pi}{4}$

SIGNAL POINT ARRANGEMENT OF REDUNDANT SUBCARRIER SIGNALS (DC COMPONENT)

# FIG.5

**FIG.6**

# FIG.7

EP 0 932 285 B1

# FIG.8

IMAGINARY
AXIS

SIGNAL POINT ARRANGEMENT OF
INFORMATION SUBCARRIER SIGNALS

1

0    REAL
AXIS

-2    SIGNAL POINT OF REDUNDANT
SUBCARRIER SIGNAL

## FIG.9

IMAGINARY AXIS AMPLITUDE LEVEL

MAXIMUM AMPLITUDE BEFORE REDUNDANT SUBCARRIER SIGNAL IS ADDED

REAL AXIS AMPLITUDE LEVEL

## FIG.10

POWER LEVEL

REDUNDANT SUBCARRIER SIGNAL IS ADDED

INFORMATION SUBCARRIER SIGNAL ONLY

TIME SAMPLE i

22

# FIG.11

| SEQUENCE NO. | INFORMATION BIT SEQUANCE | REDUNDANT SUBCARRIER SIGNAL 1 | | REDUNDANT SUBCARRIER SIGNAL 2 | |
|---|---|---|---|---|---|
| | | AMPLITUDE | PHASE | AMPLITUDE | PHASE |
| 0 | 0 0 0 0 0 0 0 | $a_{1.0}$ | $\theta_{1.0}$ | $a_{2.0}$ | $\theta_{2.0}$ |
| 1 | 0 0 0 0 0 0 1 | $a_{1.1}$ | $\theta_{1.1}$ | $a_{2.1}$ | $\theta_{2.1}$ |
| 2 | 0 0 0 0 0 1 0 | $a_{1.2}$ | $\theta_{1.2}$ | $a_{2.2}$ | $\theta_{2.2}$ |
| 3 | 0 0 0 0 0 1 1 | $a_{1.3}$ | $\theta_{1.3}$ | $a_{2.3}$ | $\theta_{2.3}$ |
| | | | | | |

# FIG.12

BEFORE REDUNDANT SUBCARRIER SIGNAL IS ADDED

AFTER REDUNDANT SUBCARRIER SIGNAL IS ADDED

THRESHOLD VALUE

IMAGINARY AXIS AMPLITUDE LEVEL

REAL AXIS AMPLITUDE LEVEL

## FIG.13

INFORMATION BIT SEQUENCE → MODULATING PART (1) → SERIAL-TO-PARALLEL CONVERTING PART (2) → 3 FAST INVERSE FOURIER TRANSFORMING PART [IFFT (21) → PARALLEL-TO-SERIAL CONVERTING PART (22)] → (8) → TRANSMITTING PART (5) → antenna (6)

DC SIGNAL GENERATING PART (24) → (8)

MAXIMUM POWER DETECTING PART (23)

24

# FIG.14

COMPLEX BASEBAND
TIME WAVEFORM

POLAR COORDINATE
CONVERTING
PART AMPLITUDE

*25*

*23*
MAXIMUM POWER
DETECTING PART

AMPLITUDE          PHASE

TO DC SIGNAL
GENERATING
PART 24

SELECTING
PART

*26*

θ

# FIG.15

```
                  START

                                          S1
      GENERATE COMPLEX INFORMATION
            SUBCARRIER SIGNAL

                                          S2
      GENERATE COMPLEX BASEBAND SIGNAL

                                          S3
      DETECT PHASE θ OF TIME SAMPLE
          HAVING MAXIMUM POWER

                                          S4
      ADD Ae⁻ʲθ TO COMPLEX BASEBAND SIGNAL

                                          S5
      OUTPUT COMPLEX BASEBAND SIGNAL
```

# FIG.18

```
                  START

                                          S1
      GENERATE COMPLEX INFORMATION
            SUBCARRIER SIGNAL

                                          S2
      GENERATE COMPLEX BASEBAND SIGNAL

                                          S3
      DETECT PHASE θ OF TIME SAMPLE
          HAVING MAXIMUM POWER

                                          S21
  ADD A'e⁻ʲθ AS COMPLEX DC SUBCARRIER SIGNAL

                                          S22
  GENERATE COMPLEX BASEBAND SIGNAL AGAIN

                                          S5
      OUTPUT COMPLEX BASEBAND SIGNAL
```

# FIG.16

START

GENERATE COMPLEX INFORMATION
SUBCARRIER SIGNAL — $S1$

GENERATE COMPLEX BASEBAND SIGNAL — $S2$

$n = 0$ — $S13$

$n = N$ ? — $S14$

YES → OUTPUT COMPLEX
BASEBAND SIGNAL — $S18$

NO

$n = n+1$ — $S15$

DETECT PHASE $\theta$ OF TIME SAMPLE
HAVING MAXIMUM POWER — $S3$

ADD $Ae^{-j\theta}$ TO COMPLEX BASEBAND SIGNAL — $S4$

# FIG.17

INFORMATION BIT SEQUENCE

*1* MODULATING PART

*2* SERIAL-TO-PARALLEL CONVERTING PART

*3* FAST INVERSE FOURIER TRANSFORMING PART

*21* IFFT

*22* PARALLEL-TO-SERIAL CONVERTING PART

*5* TRANSMITTING PART

*6*

*31* COMPLEX DC SUBCARRIER SIGNAL GENERATING PART

*23* MAXIMUM POWER DETECTING PART

EP 0 932 285 B1

# FIG.19

START

n = 0 — *S25*

GENERATE COMPLEX INFORMATION SUBCARRIER SIGNAL — *S1*

GENERATE COMPLEX BASEBAND SIGNAL — *S2*

n = N ? — *S26*

YES → OUTPUT COMPLEX BASEBAND SIGNAL — *S18*

NO

n = n+1 — *S27*

DETECT PHASE $\theta$ OF TIME SAMPLE HAVING MAXIMUM POWER — *S21*

ADD $A'e^{-j\theta}$ AS COMPLEX DC SUBCARRIER SIGNAL — *S22*

# FIG.20

START

$S1$
GENERATE COMPLEX INFORMATION
SUBCARRIER SIGNAL

$S2$
GENERATE COMPLEX BASEBAND SIGNAL

$S13$
$n = 0$

$S14$
$n = N$ ?

YES → $S18$
OUTPUT COMPLEX
BASEBAND SIGNAL

NO

$S15$
$n = n+1$

$S3$
DETECT PHASE $\theta$ OF TIME SAMPLE
HAVING MAXIMUM POWER

$S31$
ADD $A_n e^{-j\theta}$ TO COMPLEX BASEBAND SIGNAL

FIG.21

# FIG.22

| | Rmax |
|---|---|
| ORIGINAL COMPLEX BASEBAND SGNAL | 6.28 |
| An (CONSTANT) $An = \dfrac{1}{4}\sqrt{Pave}$ | 5.36 |
| $An = \dfrac{1}{2}\sqrt{Pave}$ | 5.36 |
| $An = \sqrt{Pave}$ | 5.80 |
| An (VARIABLE) $An = \dfrac{1}{2}An{-}1 ,\ A_1 = \sqrt{Pave}$ | 5.22 |

# FIG.23

START

GENERATE COMPLEX INFORMATION SUBCARRIER SIGNAL — S1

GENERATE COMPLEX BASEBAND SIGNAL — S2

n = 0 — S13

S14
n = N ? — YES

NO

n = n+1 — S15

DETECT PHASE θ OF TIME SAMPLE HAVING MAXIMUM POWER — S3

S41
IS MAXIMUM POWER BELOW THRESHOLD VALUE ? — YES

OUTPUT COMPLEX BASEBAND SIGNAL — S18

NO

ADD $A_n e^{-j\theta}$ TO COMPLEX BASEBAND SIGNAL — S31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0725510 A